# EUROPEAN PATENT APPLICATION

(11) **EP 4 307 231 A1**
(43) Date of publication of application: **17.01.2024**
(21) Application number: 22185234.6
(22) Date of filing: 15.07.2022
(51) Int. Cl.: G06T 7/73, G05D 1/02, G06Q 10/08

(54) **SYSTEM AND METHOD FOR LOCALIZING ARTICLES IN AN INTRALOGISTICS ENVIRONMENT**

(71) Applicant: Captron Electronic GmbH, 82140 Olching (DE)
(72) Inventor: REXHEPI, Kevin, 80807 München (DE); HÜTTENHOFER, Kilian, 81247 München (DE); DIETRICH, Marlon, 81243 München (DE)
(74) Representative: Lohr, Jöstingmeier & Partner

(57) **Abstract**

A system and method for mapping and localizing articles in an intralogistics environment, e.g., a chaotic warehouse includes a camera system, a computer system connected to the camera system and a plurality of AR markers at articles and/or storage locations. The computer system can search for AR markers in images of the camera system and to estimate the pose of at least one identified AR marker relative to the camera. An AR marker includes at least one ID section and a detection feature. The computer system can further calculate the position and/or orientation of the at least one identified AR marker, or the position and/or orientation of the camera, read the at least one ID section and calculate an object ID, and enter the position and/or orientation of the at least one identified AR marker and the object ID into a marker database. Further, a light pointer is mounted together with a camera on a pan-tilt head which is configured to change the light pointer's orientation in at least two axes, and the light pointer is configured to point to a selected item.

## Description

### Field of the invention

The invention relates to a system and a method for localizing articles in an intralogistics environment, e.g., a chaotic warehouse and for management of a chaotic warehouse. The system is based on optical patterns recorded by at least one camera.

### Description of the related art

A modern intralogistics environment, e.g., a chaotic warehouse provides some advantages over fixed location management like better usage of storage space and simplified storing of new articles. But a warehouse management system is needed for the complex task of management of the inventory of the warehouse. Warehouse management get even more complex if the goods and the storage spaces differ in size and shape.

A system and method for registering the inventory of a warehouse is disclosed in EP 2 668 118 A1. A robot device hanging at a rope includes a RFID reader which is moved over a front surface of a rack storage area. This enables the RFID reader to scan for RFID transponders of articles. This system requires that all articles have a RFID transponder and requires a comparatively slow scanning process. Further, the articles must be held in a rack storage area with a comparatively planar front face.

### Summary of the invention

The problem to be solved by the invention is to provide a system and a method for localizing articles in an intralogistics environment, which may include a chaotic warehouse and for management of an intralogistics environment, e.g., a chaotic warehouse. Basically, the embodiments may be used in any type of intralogistics environment including a kind of warehouse, filed warehouses, any size of storage space, manufacturing floors, office spaces and more. The system may be able to operate without RFID transponders or any other active technology that has to be placed at goods or warehouse parts. The system may not even require a rack in the storage area of the warehouse. So, it should be able to localize articles in any kind of structured and unstructured types of storage spaces such as compartments, trays or even parking spaces. The tern of articles includes also storage locations, boxes, where an article may be located or contained, palettes, storage box containers, shelf, areas and others for holding and storing articles or goods (including gases and liquids).

Solutions of the problem are described in the independent claims. The dependent claims relate to further improvements of the invention.

In an embodiment, a system for localizing articles in an intralogistics environment, e.g., in a chaotic warehouse and management of such an intralogistics environment, e.g., a chaotic warehouse includes at least a camera system connected to a computer system. The camera system includes at least one camera but may include a plurality of cameras. The computer system includes at least one computer, which may be at the camera, at a cart, in a warehouse or it may be cloud based. The at least one camera is configured to take and send images to the computer system. Images may be sent in predetermined intervals, upon request by the computer system, upon user request or after a camera has detected any movement or change in its image. There may either individual images be sent or sequences of images like a video stream.

Each of the articles to be managed and/or a storage space for an article and/or bins for articles (e.g., for bulk goods like screws) may include at least one optical marker. Such a marker includes at least one of a bar code, a QR code or an AR marker, e.g., an ARUCO marker. It also may be any type of fiducial marker. Such a marker may be attached, e.g. on a label or a sticker or may be directly printed, graved, e.g. laser graved or embedded into the surface of an article. Other examples of such AR markers are ARToolKit or ARTag. AR markers (augmented reality markers) are images or small objects which can be used for aligning and positioning AR objects. Herein AR is an abbreviation for Augmented Reality. A specific AR marker type is the ARUCO marker which has been developed by the Ava group of the University of Cordoba (Spain). Herein the term AR marker includes any of the marker types mentioned herein which may be suitable for the method disclosed herein. There is no limit for placement of AR markers. They may be everywhere from fixed locations at infrastructure to goods and articles.

An AR marker may include a structure for bearing an object ID. Such an object ID may be an article identifier, part number or any other suitable code. The code may include bars or rectangular or squared fields which may be colored or simply black and white. This structure is called ID section herein. Further, the AR marker has a feature, e.g., a black rim or any other structure or pattern configured to be detected. This is called the detection feature herein.

The computer system may receive an image taken by a camera. A detection algorithm in the computer system may search for corners and edges inside the image. When the detection algorithm detects a distinct corners-edges combination, a marker may be identified and localized inside the image. Based on further trigonometry, camera parameters and the real world size of the marker, the relative position and orientation between the camera and the marker may be calculated. Calculations of the real-time visual odometry may follow to update the position of goods and the position of the user.

Basically, a broad variety of markers may be used, but AR markers have some advantages. They allow detection from a greater distance than most fiducial markers. As a result, they are detected on more images than otherwise. This later helps to calculate their position using photogrammetry/SLAM based algorithms. While the outer contour of normal barcodes or QR codes is at least partly determined by the coding bit pattern and changes therefore from code to code, an AR marker provides large, predetermined features which can allow a good initial estimation of the pose or angle and/or distance to the camera. Although herein, specifically AR markers are mentioned, the method and device may work with any kind of suitable fiducial markers which may contain at least an information about the marker e.g. an unique identifier and some means for recognizability e.g. a distinct geometric shape.

The use of markers may only the first step in evolving the system to a self-learning warehouse solution. Currently markers solve the computation heavy problem of identifying unique corner-edge patterns rapidly to demonstrate the fundamental ability to learn, manage and update all goods inside any warehouse.

In an embodiment, the computer system is configured to analyze the images and/or search for AR markers in the images. Further it may be configured to calculate and/or estimate at least one of the positions, the orientation or the pose of identified AR markers relative to the at least one camera which took the images. Optionally estimating at least one pose and/or position of the camera may be estimated.

The pose includes the position and the orientation of an object. The computer system may further be configured to identify the position of the at least one camera which took the images. The computer system may further be configured to calculate the position and/or orientation of the at least one identified AR marker. This may be based on the position of a camera and a distance and/or angle of an AR code relative to the camera. Alternatively, the position and/or orientation may be calculated by comparison of geometries within an image and known pairs of 3d-points and 2d-point. If the image coordinates of each detected code can be assigned to a previously calculated 3D coordinate, the position of the camera can be calculated. Theoretically, one marker per image is sufficient to calculate the camera pose. The larger the pixel area of the marker on the image, the more accurate the calculation of the camera position. If this size is too small, the error of the Camera position is too large to use. Since physically very small markers (2cm x 2cm) are used in the current prototype, more than one has to be used here. Nevertheless, physically larger markers can be used as orientation aids, in environments with a very low density of markers.

An AR marker pose calculation may be done by a Perspective-n-Point (PnP) algorithm which is available as open source. The error increases with increasing distance. Under good conditions, AR codes having a size of 2cm x 2cm can be detected at a distance of 2m.

A method for localizing articles in an intralogistics environment may use a computer system, at least one camera, and a plurality of AR markers assigned to articles. The method may include the steps of:
- taking at least one image by the at least one camera and sending the at least one image to the computer system (120),
- the computer system searching for AR markers in the images,
- identifying at least two AR markers,
- reading ID sections of the at least two AR markers,
- determining object IDs of the at least two AR markers from the ID sections,
- estimating at least one relative position of the at least two AR markers relative to each other and/or optionally a pose or position of the at least one camera e.g. by a SLAM algorithm,
- storing the estimated position together with the object ID for at least one of the at least two AR markers in a marker database.

These steps may be used to initially build up the marker database. They may also be used to update the marker database.

The method may further include the steps of:
a) selecting a position of interest, the selection may be done from an item database or the marker database or by defining coordinates, and
b) repeating the following substeps:
   - taking at least one image by the at least one camera,
   - searching for AR markers in the images,
   - identifying at least one AR marker,
   - reading ID sections of the at least one AR marker,
   - determining an object IDs of the at least one AR marker from the ID sections,
   - lookup of the position of the at least one AR marker in the marker database,
   - estimating at least one pose and/or position of the at least one camera based on the position of the at least one AR marker and optionally estimating at least one position of the at least one AR marker e.g., by a SLAM algorithm, and updating of the marker database,
   - calculating a route to the position of interest from the position of the camera,
   - forwarding the route to a user or to a movable device.
   These steps request in a) a target position (position of interest), where e.g., a specific type of article is stored or should be stored. Further, in b) the actual position of the camera is estimated and a route to the position of interest is calculated.

The method may further include the steps of after performing at least once the previous steps in sections a) and b):
displaying on at least one of a display, a computer screen and a handheld device a map of the warehouse or a part thereof indicating the position of interest or the route to the position of interest.

The method may further include the steps of:
performing continuously (e.g., during movement of the camera) the above steps of displaying to interactively guide a user to the position of interest. This may be done while the at least one camera is moved e.g., through the intralogistics environment.

The method may further include the steps of:
- moving the at least one camera
- performing the substeps of step b) above and/or
- repeating the above steps of displaying.

The method may further include the steps of:
- taking at least one image by the at least one camera,
- searching for AR markers in the images,
- identifying at least one AR marker,
- reading ID sections of the at least one AR marker,
- determining an object IDs of the at least one AR marker from the ID sections,
- lookup of the position of the at least one AR marker in the marker database,
- estimating at least one pose and/or position of the at least one camera based on the position of the at least one AR marker and optionally estimating at least one position of the at least one AR marker e.g., by a SLAM algorithm, and updating of the marker database,
- indicating the position of interest relative to the camera e.g. by at least one of directional indicators (e.g., on a display, a monitor, by LEDs or by keys or switches) an Augmented Reality view and a light pointer.

The method may further include the steps of indicating the position of interest:
- by displaying a marker pointing to the position of interest within a virtual or real image and/or
- pointing a pointer which may include at least one of a light pointer, a beamer or a laser scanner to the position of interest.

The method may further include the steps of, by using an IMU (Inertial Measurement Unit) being mechanically coupled to the camera:
- updating the at least one pose and/or position of the at least one camera (624) by reading data from the IMU and/or
- stabilizing of at least one image taken by the camera based on data from the IMU.

At least one of the plurality of AR markers may include a detection feature which may include a black rim which encloses an ID section, wherein the ID section may include bars or rectangular or squared fields or any other suitable geometric form, which may be colored or simply black and white.

A system for localizing articles in an intralogistics environment may include a computer system, and at least one camera. The system may be configured to perform a method according to any of the previous claims.

The camera may either be handheld by a user, mounted to a user's head, AR glasses or mounted to a cart. The camera may also be part of a mobile device like a cell phone or a tablet PC. There may also be at least one stationary fixed or tiltable camera. If the camera's position is known, the computer system may determine the distance, direction, and orientation of an article in the camera's view. Further, a movable camera may be used for a SLAM (Simultaneous Localization and Mapping) algorithm in the computer system for determining the camera position and to generate and/or update a map of the camera's environment.

The camera may also be part of pan-tilt camera head. The pan-tilt camera head may allow to change a camera's orientation in at least two axes. The orientation may be stabilized by a IMU (Inertial Measurement Unit) connected to the camera, such that the camera points to a selected position in space, which may be an AR code, independent of the camera's movement. The camera may be mounted to a gimbal. The IMU may either be connected directly to the camera or to a moving device like a pan-tilt head, which performs a defined movement of the camera. This may compensate in-motion unsharpness and may provide a longer exposure time reducing image noise. The IMU may further allow to navigate across areas e.g. corridors, where no AR marker is visible or where the camera moves too fast for image evaluation. A stabilization of the camera may alternatively/additionally be performed by image processing of the camera image.

The pan-tilt camera head may also allow to scan a larger area of the environment during movement, e.g. large storage racks over their full height. Further, certain areas of the environment may be scanned or rescanned when still approaching them or leaving them. Further, a light pointer, e.g. a focused LED or a laser may be mounted on the pan-tilt camera head or a separate pan-tilt head. The light pointer may also be a device which requires no pan/tilt e.g. a beamer. It may be configured to indicate a user a certain position in space, which may be a certain AR marker or a certain shelf.

To improve a camera's localization, further AR markers may be provided at fixed positions in the warehouse. These can then immediately be used for camera localization. Further a camera may have its own AR marker which is registered in the marker database or has been assigned a virtual AR marker which has only an entry in the marker database. The computer system may be configured to identify the position of the at least one camera based on at least one of a position value in a marker database, a position value and/or a pose value in a camera database.

AR markers may include a reflective material, such that they may be better detected by a user and/or the camera. AR markers may have different types and/or sizes. There may be larger markers for identifying infrastructure, which may be identifiable from a larger distance.

Inventory taking or initialization of a warehouse which is unknown to the computer system is comparatively simple. The camera system or at least one camera of the camera system may be moved through the warehouse. At least one marker of each article to be inventoried may be on at least one image of the camera system. A better resolution and a better consistency may be obtained with multiple images, which may be taken from different points of view and/or different viewing angles. This may include a video stream from a moving camera.

The computer system evaluates the images from the camera system and tries to identify markers. These markers may be evaluated to identify their object ID from their ID section and/or to localize at least one of an object and a camera. Such information may be stored in a marker database which may contain object IDs and the related positions. The marker database may be used for localization and/or mapping (e.g., SLAM) where e.g., based on known positions of markers, a camera position and/or the position of new markers with unknown position can be estimated. The marker database may include further data, e.g., article related data like an article identifier, SKU (stockkeeping unit), a text description, a quantity of available articles.

The data base may further be used to guide a user to a selected article, which the user may take from the warehouse. The position of a selected article may be indicated on a map. The map may further indicate the shortest route from its actual position to the article. The marker database may also be used from a navigation software (also called a navigation app) on a mobile device (also called handheld device) to navigate a user to the selected article. The position and/or orientation of the user may be determined by using a camera and localization by AR markers.

In an embodiment, a laser is provided, which may point to a selected article. The laser may be on a cart, a user is driving, pushing, or pulling or the laser may be stationary. For providing visual guidance to the user, traditional systems, like pick-by-light solutions need to be mounted directly to a rack and even to each compartment. There are also technologies that require the user to wear devices like AR glasses to guide the user. A moving laser system may be attachable at a cart or at distinct places that may cover the whole warehouse to guide the user freely while saving technical resources.

Further, the marker database may be used for an AR software or app on a mobile device, e.g., a smartphone or tablet PC to generate an AR camera view. A user may see at a screen on the mobile device an image of a camera, which may be part of the mobile device. At least one marker, which may indicate the direction to and/or the position of a selected article may be provided. A special marking may be applied if the selected article is in direct view. Further sensors, which are in almost every mobile device like GNSS, acceleration or magnetic compass may be used to improve localization precision, speed and performance.

In an embodiment, the system is configured to identify special gestures. Such a special gesture may be, if a handheld camera by a user is moved close to the marker of a selected article to signal, that the article has been found and a further article should be searched. There may be further gestures, like rotating the camera e.g., for 90° with a close up view of a marker, which e.g., may indicate that an article has been taken.

In an embodiment, there may be a 3D hand recognition via a single camera that uses artificial intelligence to detect and respond to intuitive human movements, such as grasping an item, moving items from A to B, interacting with the system to change the item list or priorities, or canceling a job. This interaction between human and machine may be done via visual, haptic, or audio feedback. This feature-rich addition not only enhances the intuitive operation of the system, but also supports the well-being of the human worker by detecting tremors, heavy work, or accidents.

In an embodiment, users and/or carts moving through the warehouse and/or stationary cameras continuously deliver images to the computer system, which then can detect changed positions of individual articles. It is possible to relocate articles in the warehouse by simply moving them from one position to another. It is not necessary to register the relocation with the computer system due to the automatic updates.

In addition to the optical marker or as replacement of an optical marker a RFID transponder may be provided.

The system may even be used to manage non designated storage spaces like an office space. Therefore, it may be used for a very broad field of inventory management in general.

The system may also be combined with at least one pick by light system that may support the embodiments in areas of high-frequency picking or complex pick instructions like batch picking or multi-user picking.

Bringing into service of a new warehouse is comparatively easy. All articles or storage spaces or bins for articles (e.g., for bulk goods like screws) have to get an AR marker, preferably on a well visible side. Then the system will start scanning through the warehouse with persons or carts moving through the warehouse and build up a marker database of articles and their positions.

The system can also perform a permanent inventory, as all articles can be checked from time to time when scanned. If an article is missing, a user may be guided to its last position to search for the article.

As the system is fully operational based on AR markers, no further RFID transponders, which are more expensive than labels with AR markers, are required. The embodiments reduce the total amount of hardware and devices to a minimum. Simple codes printed on paper, which are constantly reused are significantly more environmentally friendly than any other sensor, button, or display solution on the market.

The minimal equipment is a camera and a computer which are available in almost every smartphone. Therefore, a smartphone with a software can perform the steps described herein.

Although the system and method described herein are very efficient in working in an intralogistics environment, they may also be used in a fixed location warehouse. Such a fixed location warehouse may also profit from further benefits like permanent inventory or recovering of lost or misplaced articles.

In an embodiment, the system is configured for an initial calibration which may be done with a known pattern like a checkerboard. The calibration parameters may be stored, e.g. in a camera database.

In an embodiment, a first camera configured for imaging e.g. large AR markers on a floor and a second camera configured for imaging e.g. smaller AR markers at storage spaces are provided. The large AR markers may have a size of 16 cm x 16 cm or may be in the range between 5 cm x 5 cm and 30 cm x 30 cm. The smaller AR markers have less than half the size of the large AR markers. The larger AR markers on the floor allow a more precise localization and mapping. In an alternate embodiment, only one camera with a view to at least the storage spaces is provided. The larger AR markers may be at walls or fixed structures of storage spaces.

In an embodiment, a system for localizing articles in an intralogistics environment may include a camera system, a computer system and it may further include a plurality of AR markers at articles and/or storage locations. The camera system may have at least one camera, which may be configured to take and send a plurality of images to the computer system. The computer system may be configured to build and/or maintain a marker database by repeating the following sequence:
- searching for AR markers in the images,
- identifying at least two AR markers,
- estimating at least one relative pose of at least two AR markers relative to each other,
- optionally estimating at least one pose and/or position of the camera, The computer system may further be configured to maintain a marker database by repeating the sequence of:
- calculating the position and an optional orientation of at least one AR marker in the marker database based on a chain of relative poses and a known position of at least one of the AR markers in the marker database, e.g. by a SLAM algorithm.

In a method, a camera system including at least one camera takes images from a warehouse and transmits the images to a computer system. The computer system evaluates the images and identifies AR markers in the images.

The computer system then uses at least one of the AR markers for at least one of estimating the distance and/or angle between the at least one camera and the at least one AR marker and reading an object ID of the at least one AR marker.

If the positions of most of detected markers within an image are known, the camera pose can be estimated, even if some positions have changed since they have been calculated. If larger markers are used, a lower number of markers or even only one marker may be required. If the AR marker is at a fixed position, the position of the camera may be estimated. When the AR marker is of an article, the position of the article may be estimated. This may be more or less precise depending on the precision of the camera position, which may be known precisely, if the camera is a fixed camera and which may have been estimated based on AR markers or by SLAM. A camera position or article position may also be determined by using patterns of multiple AR markers of articles. Normally, only a few articles are moved. So, if of a plurality of articles, most stay in a previously recorded spatial relationship, these may also be used as a position reference.

Based on these position estimates, the position of the at least one AR marker is determined by the computer system.

The position of the at least one AR marker together with the object ID of the at least one AR marker may be stored in a marker database. Further article related data may be stored in the marker database like an article identifier, SKU (stockkeeping unit), a text description, a quantity of available articles.

An enterprise resource planning software or warehouse management software starts a request, usually in the form of a work order which contains a list of articles to pick or place. This information is handed over and processes by the proposed solution. For picking a specific article from the warehouse, using the article identifier the computer system retrieves the corresponding article position inside the warehouse based on the marker database. This selection may be based on the object ID or any other data in the marker database like SKU.

Based on the position, a handheld or a stationary display or movable display (e.g. display on a cart) may show a map of the warehouse or a part thereof indicating the position of the article and/or showing the shortest route to the article. Further, a user may be guided interactively by a software running on a handheld device to the position. The software may also indicate the position of an article or of its AR marker on an AR camera view.

After the user picked the selected article, this may be confirmed by different state-of-the-art techniques. The user may confirm by pressing a sensor button, via voice or gesture detection in the camera view. Also, a camera may detect covering of the camera or an AR marker by a user picking an article. Further placing of the article on a cart may be detected e.g., by weighing or evaluation of a camera image of the cart.

In an embodiment, a cart includes a system as described herein. The cart may further be configured to move e.g. autonomously, navigate, orientate based on the estimated pose of the camera. Further, the cart may have a direction indicator for indicating a direction into which the cart will move next or should be moved next by an operator. The direction indicator may be a screen or touch screen, a set of illuminated arrows, or any other suitable indicating device including sound or speech.

The embodiments may allow to optimize travel paths, provide a chaotic warehouse including dynamic placement of articles. It may allow spontaneous search for articles and spontaneous inventory.

### Description of Drawings

In the following the invention will be described by way of example, without limitation of the general inventive concept, on examples of embodiment with reference to the drawings.
- Figure 1: shows a system for localizing articles in intralogistics environment.
- Figure 2: shows an embodiment of an AR marker.
- Figure 3: shows a method for localizing articles in an intralogistics environment.
- Figure 4: shows a method for guiding a user to a selected article in an intralogistics environment.
- Figure 5: shows a cart in a perspective view.
- Figure 6: shows a cart in a front view.

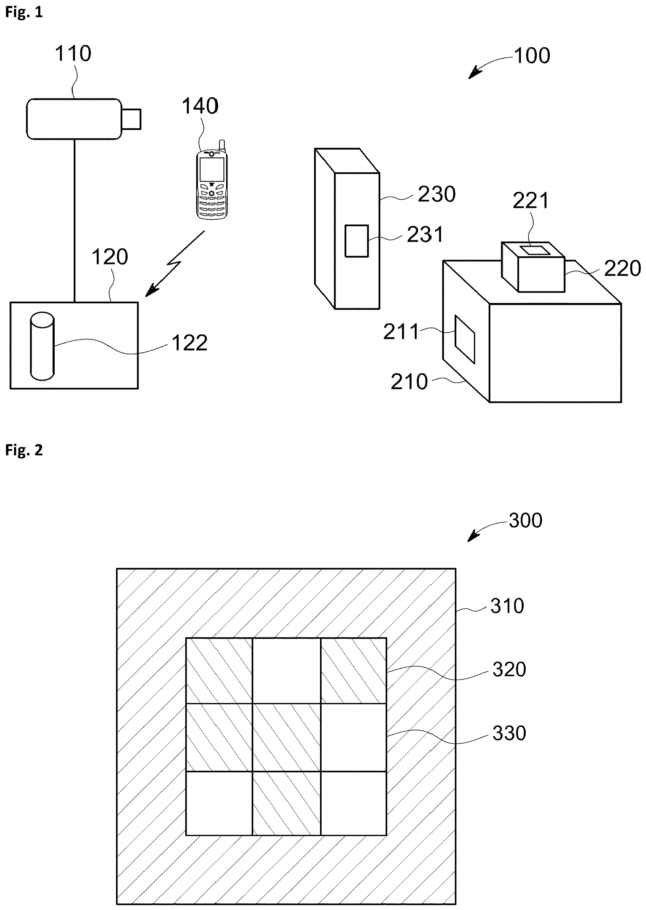

In figure 1 a first embodiment of a system 100 for localizing articles in an intralogistics environment is shown. A camera system 110 is connected to a computer system 120. The computer system 120 may have a marker database 122. A first article or shelf 210 may have a first marker 211, 221, 231. A second article 220 may have a second marker 221. A third article 230 may have a third marker 231. The articles may be at different locations in a warehouse. They may have different poses and different orientations.

Camera system 110 has at least one camera, which is shown in this figure. The camera is configured to take a plurality of images of an area of the warehouse, where the articles are located and to send these images to the computer system.

The computer system 120 is configured to identify AR markers 211, 221, 231 in the images and to estimate the pose of the identified AR markers. This pose may be either estimated relative to the camera or it may be estimated relative to other objects on the image which may preferably have a known pose. The pose estimation of any participating object, e.g. the person, the camera, the items, is always estimated relative to another participating object. The warehouse floor is basically composed of a 3D relative map of the detected markers. Therefore, no prior knowledge needs to be feed to the system. The camera position may be estimated by a slam algorithm or by any other means for simultaneously determining a position and creating a map of the environment. It may also be determined by AR markers on the floor or at other fixed locations. Further, the position of the camera may be known, if the camera is mounted at a fixed position. The computer system is further configured to read the ID section of the AR marker This marker ID can then later be assigned information about the goods, such as goods ID, name, quantity, etc. assigned information are then stored in a marker database. The marker ID may also include the good information itself. If the full pose cannot be estimated, a position of the marker may be sufficient.

The computer system may also be configured to select from the marker data base position of a selected article or the AR marker of the article. Based on this, the computer system may show a map of the warehouse or a part of the warehouse, indicating the position of the article. By the information retrieved from the static or moving camera system, the computer system may directly calculate, create and update a 3D map of all seen markers representing all known article positions in 3D. It may further show the shortest route to the article from a specific starting point, which may be the starting point of a user or it may calculate an optimized path for the accumulated work orders that need to be batch picked and placed. The map and/or the shortest route may be shown on a handheld device 140 like a mobile phone or a tablet PC, which may already be sufficient to serve for the whole computing power the solution requires. It may also be shown on a cart, which may be used for collecting and placing articles.

A handheld device 140 may have a software, which is configured to receive at least the position or the pose of a selected article or its AR marker from the marker database. Further, the handheld device may interactively guide the user to the position of the article. In an embodiment, the handheld device may have an AR (Augmented Reality) software which displays a camera view showing an image of an environment of the handheld device and at least one marker which may indicate the direction to the selected article and/or the position of the selected article.

Fig. 2 shows an embodiment of an AR marker. In general, AR marker 300 may have a detection means 310 and at least one coding field 320, 330. AR markers may be any kind of suitable markers, e.g., QR Codes, Data Matrix, 2 D Codes. Further instead of using AR markers products, bins, goods or any type of infrastructure may be identified e.g., by artificial intelligence. The detection means may be used for recognizing AR markers on images. The image position can be used for calculating the pose of the AR marker, while the coding fields contain the marker ID, which can be used as a reference to an object in the database. Preferably, the object ID is a unique ID. Such an object ID may be represented by a pattern of the coding fields, which in this example are either black like the coding fields 320 or white like the coding fields 330. The coding fields may have any other color which may make them distinguishable and they may have any other shape. Further, there may be any ornament or logo at an AR marker.

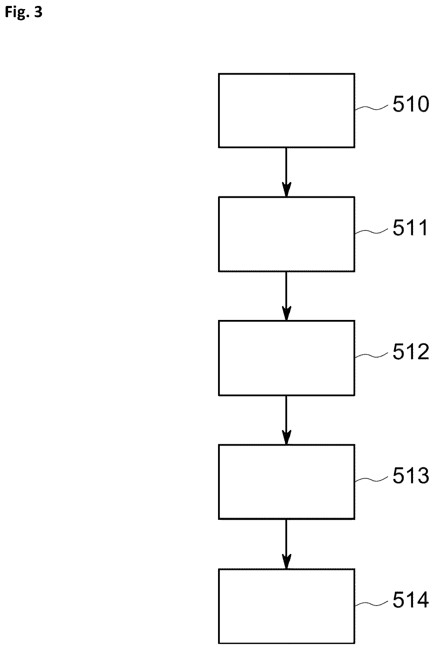

In Fig. 3, a method for localizing articles in an intralogistics environment is shown in step 510, a camera system including at least one camera takes images from a warehouse and transmits the images to a computer system. In step 511 the computer system evaluates the images and identifies AR markers in the images. In step 512, the computer system may use at least one of the AR markers e.g. for calculating the camera pose. When using larger markers, one marker may be sufficient. When using smaller markers, known pairs of 3d-points and 2d-points may be needed. For an accurate Position estimation a minimum of 3 or better 4 known markers may be necessary. Further, there may be three different camera poses to provide different views on the AR markers. The known markers may not be on a single line, the different camera views may also not be on a single line. The In step 513, the computer system may estimate the position(s) of the at least one AR marker.

The markers may be detected on multiple images to allow accurate 3D reconstruction by photogrammetry, SLAM or other similar algorithms. There may be at least four markers on each image with detected markers. However, this depends on the size of the markers used. When using large markers, even one marker per image may be sufficient. For the 3D reconstruction of the warehouse, all gained information from all images may be used. The algorithm may start with a simple triangulation of points and/or markers between two frames at the beginning to initialize the map. After that it may use an optimization algorithm for refining all reconstructed points. By using those known 3D points more camera poses can be estimated. Images where the camera pose and/or position is known can include unknown points in the calculation and triangulate them if they can be seen on multiple images. Those newly triangulated points are then refined using an optimization algorithm. The step may be repeated until all points and camera poses are calculated. Only the points may be saved to be reused the next time the system is started. It may be that not all points can be reconstructed, because too few markers were detected on the images in which they occur to calculate a camera position. Therefore, only images where the camera position can be calculated may be used for the 3D reconstruction. This is just one example of 3D Reconstruction. There are several different methods, which may require only two markers per image.

In step 514, the computer system stores the position of the at least one AR marker together with the object ID with the at least one AR marker in a marker database. The steps may be performed in the sequence as shown above. The steps may be repeated multiple times automatically in the background by the system to update the database during the productive usage of the system. The constantly updating marker positions allow for instant identification, updates and notifications. E.g., if a new article was placed in the warehouse without telling the system, the article will be recognized and included to the relative warehouse map. Also removed articles, that should be in the warehouse will be detected as missing and the system can instantly alert the operator. The same method may be used if an article was moved from a first location to a second location in the warehouse without using the system. When the item is detected at the second position, the system immediately informs the operator and immediately updates the position of the item by removing the first position and updating the second position. When an article is not seen by the camera system, the computer system informs the operator to look for the lost article and may navigate the operator to the last location the article was seen.

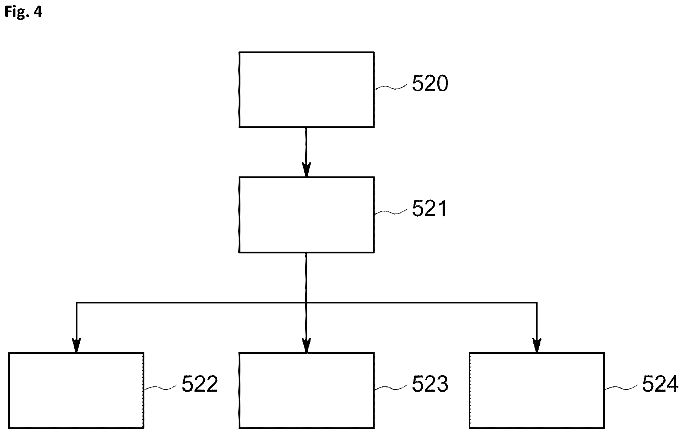

Figure 4 shows a method for guiding a user to a selected article in an intralogistics environment, e.g., a chaotic warehouse. In step 520, articles are localized in an intralogistics environment as mentioned in the previous steps 510 to 514. These steps may have been performed even a longer period of time e.g. some hours, days, weeks before the next step takes place. In step 521, the computer system selects from the marker database a position of a selected article. Then, at least one of the following steps 522, 523 or 524 are performed. In step 522, a display shows a map of the warehouse or part thereof, which indicates the position of the article and which may show the shortest route to the article. In step 523, a software on a handheld device 140 interactively guides a user to the position of an article and in step 524, an AR software guides a user and indicates the position of an article in the AR camera view or by a laser or a light pointer. Such an AR camera view may show an image of an environment of the handheld device together with at least one marker, which may indicate the direction to, and/or the position of the selected article.

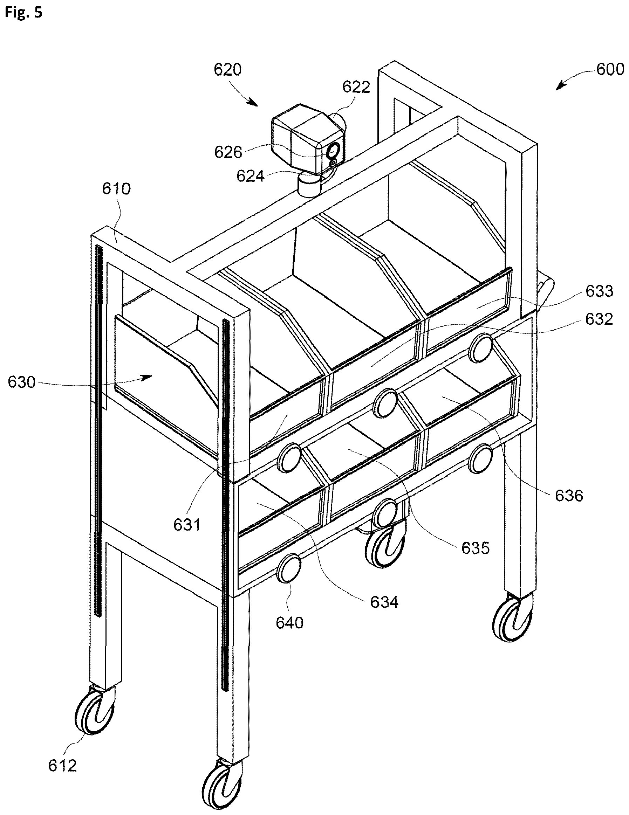

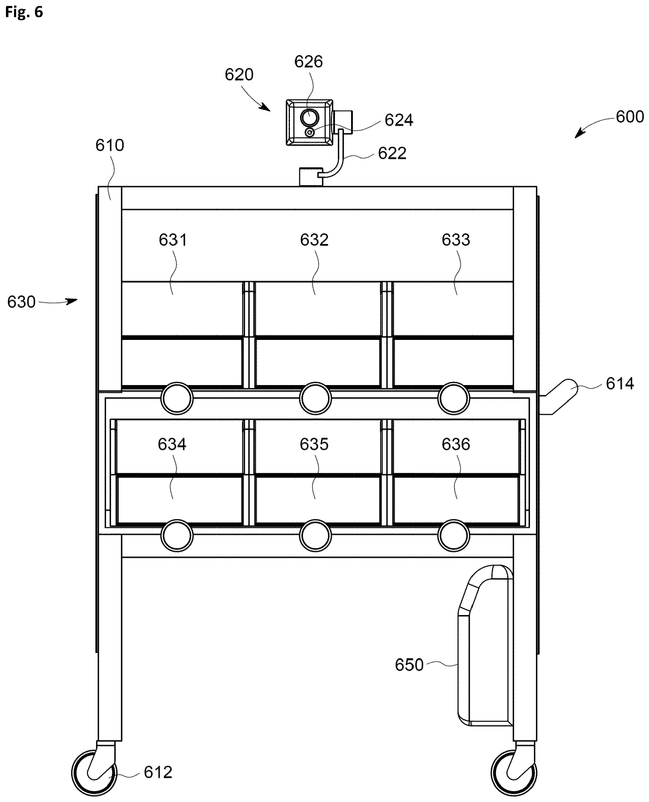

Figure 5 shows a cart in a perspective view. Figure 6 shows the cart in a front view. A cart 600 may include a cart frame 610, which may include a plurality of rollers 612, e.g. 4 rollers and an optional handle 614. The cart 600 may be configured to provide a transport space 630 which may hold at least one container 631 - 636. There may be feedback buttons 640 and/or indicators assigned to containers or container spaces. A camera and/or light pointer head 620 may be mounted to the cart. It may be located on top of the cart to have a free field of view. The camera and/or light pointer head 620 may include a camera 624 and/or a light pointer 626. The head may be mounted to a gimbal or a similar device which allows to position the head and/or to stabilize the head independent of movement of the cart. The cart may further hold a computer 650 which may include communication means and which may further include a battery for powering the electronic devices at the cart.

### List of reference numerals

- 100: warehouse management system
- 110: camera system
- 120: computer system
- 122: marker database
- 140: handheld device
- 210, 220, 230: articles
- 211, 221, 231: Markers
- 300: AR marker
- 310: localization means
- 320, 330: coding fields
- 510-514: steps of method for localizing articles in an intralogistics environment
- 520-524: steps of second method
- 600: cart
- 610: cart frame
- 612: roller
- 614: handle
- 620: camera head
- 622: gimbal
- 624: camera
- 626: light pointer
- 630: transport space
- 631-636: containers
- 640: button
- 650: computer

## Claims

1. A method for localizing articles in an intralogistics environment, the method using a computer system (120), at least one camera (624), and a plurality of AR markers (211) assigned to articles (210, 220, 230), the method including the steps of:
- taking at least one image by the at least one camera (624) and sending the at least one image to the computer system (120),
- the computer system (120) searching for AR markers in the images,
- identifying at least two AR markers (211),
- reading ID sections of the at least two AR markers (211),
- determining object IDs of the at least two AR markers (211) from the ID sections,
- estimating at least one relative position of the at least two AR markers (211) relative to each other and/or optionally a pose or position of the at least one camera e.g. by a SLAM algorithm,
- storing the estimated position together with the object ID for at least one of the at least two AR markers (211) in a marker database (122).

2. The method according to claim 1,
including the steps of:
a) selecting a position of interest, the selection may be done from an item database or the marker database or by defining coordinates, and
b) repeating the following steps:
- taking at least one image by the at least one camera (624),
- searching for AR markers (211) in the images,
- identifying at least one AR marker (211),
- reading ID sections of the at least one AR marker (211),
- determining an object IDs of the at least one AR marker (211) from the ID sections,
- lookup of the position of the at least one AR marker (211) in the marker database,
- estimating at least one pose and/or position of the at least one camera (624) based on the position of the at least one AR marker (211) and optionally estimating at least one position of the at least one AR marker (211) e.g., by a SLAM algorithm, and updating of the marker database,
- calculating a route to the position of interest from the position of the camera
- forwarding the route to a user or to a movable device.

3. The method according to claim 2,
including the steps of after performing at least once the steps of claim 2: displaying on at least one of a display, a computer screen and a handheld device a map of the warehouse or a part thereof indicating the position of interest or the route to the position of interest.

4. The method according to claim 3,
including the steps of:
performing continuously the steps of claim 3 to interactively guide a user to the position of interest.

5. The method according to claims 2 and/or 3,
including the steps of
- moving the at least one camera
- performing the steps of section b) of claim 2 and/or
- repeating the steps of claim 3.

6. The method according to any of the previous claims,
including the steps of:
- taking at least one image by the at least one camera (624),
- searching for AR markers (211) in the images,
- identifying at least one AR marker (211),
- reading ID sections of the at least one AR marker (211),
- determining an object IDs of the at least one AR marker (211) from the ID sections,
- lookup of the position of the at least one AR marker (211) in the marker database,
- estimating at least one pose and/or position of the at least one camera (624) based on the position of the at least one AR marker (211) and optionally estimating at least one position of the at least one AR marker (211) e.g., by a SLAM algorithm, and updating of the marker database,
- indicating the position of interest relative to the camera e.g. by at least one of directional indicators, an Augmented Reality view and a light pointer.

7. The method according to the previous claim,
including the step of indicating the position of interest
- by displaying a marker pointing to the position of interest within a virtual or real image and/or
- pointing a pointer which may include at least one of a light pointer, a beamer or a laser scanner to the position of interest.

8. The method according to any of the previous claims,
the method using an IMU (Inertial Measurement Unit) being mechanically coupled to the camera, the method including the steps of:
- updating the at least one pose and/or position of the at least one camera (624) by reading data from the IMU and/or
- stabilizing of at least one image taken by the camera based on data from the IMU.

9. A method according to any of the previous claims,
**characterized in, that**
at least one of the plurality of AR markers (211) includes a detection feature which may include a black rim which encloses an ID section, wherein the ID section may include bars or rectangular or squared fields which may be colored or simply black and white.

10. A system for localizing articles (201, 220, 230) in an intralogistics environment including a computer system (120), at least one camera (624), the system being configured to perform a method according to any of the previous claims.

11. A system according to the previous claim,
**characterized in, that**
the system includes a pointer which may include at least one of
a light pointer,
a beamer or
a laser scanner, wherein
the pointer may be mounted on a pan-tilt head (620) which is configured to change the pointer's orientation in at least two axes,
the pointer may be stabilized by an IMU, and/or
the pointer may be configured to point to a position of interest, and/or
the at least one camera (624) may be mounted to a pan-tilt head (620) movable together with the pointer.

12. A system according to any of the previous system claims,
**characterized in, that**
the at least one camera (624) is mounted on a specific pan-tilt camera head which is configured to change the camera's orientation in at least two axes, wherein the pan-tilt camera head may be stabilized by a IMU and/or
the at least one camera (624) is part of a mobile device like a cell phone or a PC, a tablet PC, VR or AR -glasses,- goggles, -headset.

13. A system according to any of the previous system claims,
**characterized in, that**
a first camera is configured for imaging AR markers on a fixed positions and a second camera is configured for imaging AR markers at articles.

14. A cart comprising a system according to any of the previous system claims, wherein the cart may have a direction indicator for indicating a direction into which the cart will move next.

15. A cart according to the previous claim,
**characterized in, that**
the cart is configured to move e.g. autonomously, navigate, orientate based on the estimated pose of the camera.
